# EUROPEAN PATENT APPLICATION

(11) **EP 2 327 892 A1**
(43) Date of publication of application: **01.06.2011**
(21) Application number: 09177026.3
(22) Date of filing: 25.11.2009
(51) Int. Cl.: F16C 17/10, F16C 33/10

(54) **Slide bearing**

(71) Applicant: Doosan Moxy AS, 6440 Elnesvaagen (NO)
(72) Inventor: Søbstad, Jøran, 6440 Elnesvågen (NO)
(74) Representative: Reinhard - Skuhra - Weise & Partner GbR

(57) **Abstract**

A slide bearing is provided, which includes a frame 3 having a structure formed in one direction thereof to be coupled to a rotation shaft, oil grooves 11a and 12a and plural friction surfaces formed in the other direction thereof, and oil paths 11 and 12 formed on the friction surfaces, respectively, by the oil grooves 11a and 12a for the flow of lubricating oil, wherein the respective oil paths communicate with each other so as to enable the lubricating oil to flow. According to the slide bearing, a sufficient lubricant film can be formed around the frame that is in contact with the corresponding part of the bearing support, a smooth rotation of the rotation shaft about the bearing support can be secured, and the friction noise between the slide bearing of the rotation shaft and the bearing support can be reduced.

## Description

### Field of the invention

The present invention relates to a slide bearing, and more particularly, to a slide bearing which can provide a stable lubricant film between a slide bearing fixed in a body to a rotation shaft (or journal) and a counterpart bearing support rotatably accommodating the slide bearing, secure smooth rotation of the rotation shaft about the bearing support, and reduce friction noise between the slide bearing of the rotation shaft and the bearing support.

### Description of the Prior Art

In general, a bearing is one of machine elements, and is a component which carries a load of a counterpart component that is rotated or reciprocated, for example, a shaft, axle, or journal, and rotatably supports the shaft.

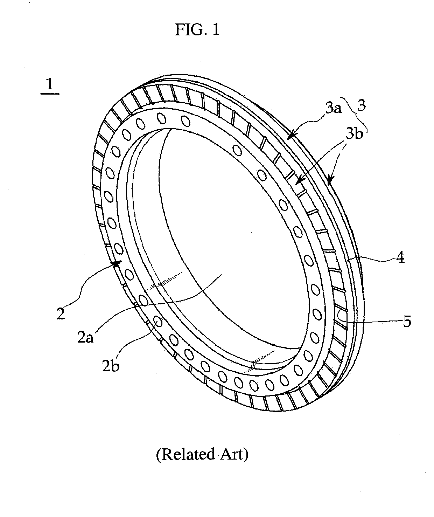

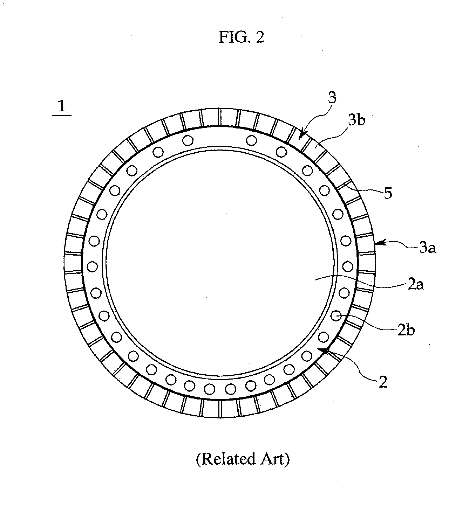

A conventional slide bearing 1, as illustrated in FIGs. 1 to 3, is briefly composed of a mount part 2 positioned inside and fixed in a body to a corresponding coupling part of a rotation shaft (not illustrated), and a frame 3 positioned outside, formed in a body with the mount part 2, and rotatably accommodated in a counterpart bearing support (not illustrated).

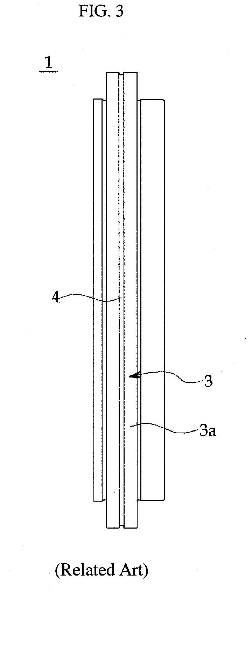

Here, the mount part 2 has a center hole 2a formed in a center part thereof to accommodate the rotation shaft, and plural coupling holes 2b formed along an inner border thereof to fix the mount part to the corresponding coupling part in a body using fasteners such as bolts and nuts (See FIGs. 1 and 3).

The frame 3 includes an upper friction surface 3a contacting a corresponding surface of the counterpart bearing support (not illustrated) through the medium of lubricating oil, and two side friction surfaces 3b positioned on both sides of a lower part of the friction surface 3a contacting corresponding surfaces of the bearing support through the medium of the lubricating oil. Along the circumference of the upper friction surface 3a of the frame 3, a radius directional oil groove 4 is formed, and along the circumferences of the two side friction surfaces 3b, straight line type oil grooves 5 are formed at predetermined intervals (See FIGs. 1 to 3).

Accordingly, if the frame 3 of the slide bearing 1 is accommodated in the counterpart bearing support (not illustrated) in a state in which the mount part 2 of the slide bearing 1 is fixed in a body to the corresponding coupling part of the rotation shaft (not illustrated) using bolts and nuts, the rotation shaft can be rotated about the bearing support through the slide bearing 1 fixed in a body to the rotation shaft.

In this case, the lubricating oil, such as grease and so on, which is filled in gaps between the radius directional oil groove 4 of the upper friction surface 3a of the frame 3, the straight line type oil grooves 5 of the two side friction surfaces 3b of the frame 3, and contact parts of the frame 3 of the slide bearing 1 and the bearing support (not illustrated), is distributed to the contact parts of the slide bearing 1 and the bearing support to form a lubricant film when the rotation shaft is rotated, and such a lubricant film enables the rotation shaft of the slide bearing to be smoothly rotated about the bearing support.

According to the conventional slide bearing 1 as described above, however, the radius directional oil groove 4 formed on the upper friction surface 3a of the frame 3 does not communicate with the straight line type oil grooves 5 formed on the two side friction surfaces 3b, and thus no sufficient lubricant film can be formed around the frame 3.

Also, according to the conventional slide bearing 1 as described above, the radius directional oil groove 4 on the upper friction surface 3a of the frame 3 and the straight line type oil grooves 5 on the side friction surfaces 3b of the frame 3 are formed in a simple pattern in which they are separated from each other. Accordingly, if oil drops in the form of a lump are produced in the oil grooves due to overheat caused by a long time operation of the slide bearing, the lubricating oil cannot be smoothly distributed to the contact parts of the bearing support (not illustrated) and the slide bearing 1.

### SUMMARY OF THE INVENTION

Accordingly, the present invention has been made to solve the above-mentioned problems occurring in the prior art, and an object of the present invention is to provide a slide bearing, which can form a sufficient lubricant film around the frame that is in contact with the corresponding parts of the bearing support by providing oil groove patterns in which friction surfaces of the frame of the slide bearing communicate with each other.

It is another object of the present invention to provide a slide bearing, which can prevent oil drops in the form of a lump from being produced in oil groove patterns formed on friction surfaces of the slide bearing even if overheat occurs in the slide bearing due to a long time operation of the slide bearing.

In order to accomplish these objects, there is provided a slide bearing including a frame having a structure formed in one direction thereof to be coupled to a rotation shaft, oil grooves and plural friction surfaces formed in the other direction thereof, according to an embodiment of the present invention, which includes oil paths formed on the friction surfaces, respectively, by the oil grooves for the flow of lubricating oil; wherein the respective oil paths communicate with each other so as to enable the lubricating oil to flow.

In addition to an embodiment of the present invention, the following detailed embodiments of the present invention may be provided.

At least one of the friction surfaces may be formed through crossing of the oil grooves.

At least one of the friction surfaces may be formed through crossing of the straight line type oil grooves.

At least one of the friction surfaces may be formed through crossing of the oil grooves at an acute angle.

An angle θ between a crossing point of the oil grooves 11a and 12a and a crossing point of the oil grooves adjacent to the crossing point is in the range of 3°∼20° outward from the central axis of the slide bearing.

An angle θ between a crossing point of the oil grooves 11a and 12a and a crossing point of the oil grooves adjacent to the crossing point is in the range of 4°∼8° outward from the central axis of the slide bearing.

An interval d between a crossing point of the oil grooves 11a and 12a and a crossing point of the oil grooves adjacent to the crossing point is in the range of 20~40 mm.

At least one of the friction surfaces may be formed through crossing of the oil grooves in the form of a curved line.

At least one of the friction surfaces may be formed through crossing of the oil grooves in the form of an arc.

At least one of the friction surfaces may be formed through crossing of the oil grooves in the form of an arc having a curvature.

An angle θ between a crossing point of the oil grooves 11a and 12a and a crossing point of the oil grooves adjacent to the crossing point is in the range of 3°∼20° outward from the central axis of the slide bearing.

An angle θ between a crossing point of the oil grooves 11a and 12a and a crossing point of the oil grooves adjacent to the crossing point is in the range of 4°∼8° outward from the central axis of the slide bearing.

An interval d between a crossing point of the oil grooves 11a and 12a and a crossing point of the oil grooves adjacent to the crossing point is in the range of 20-40 mm.

The friction surfaces may be composed of an upper surface part having a first oil path including the oil grooves, and both side surface parts having second oil paths including the oil grooves, respectively.

In the first oil path, straight line type oil grooves may be repeatedly formed, and in the second oil path, the oil grooves in the form of a curve may be repeatedly formed.

In the first oil path, the oil grooves in the form of a curve may be repeatedly formed, and in the second oil path, the straight line type oil grooves may be repeatedly formed.

The oil grooves may be "V" or "U"-shaped grooves.

The frame may further have lubricating oil reserve grooves formed in both corner parts of the frame to store and distribute a predetermined amount of lubricating oil to its neighborhood.

The slide bearing according to an embodiment of the present invention may further include a bearing support coupled to the upper surface part and the two side surface parts of the frame to be rotated.

The slide bearing according to an embodiment of the present invention may further include a lubricating oil inlet port and a lubricating oil outlet port provided on one side and the other side of the bearing support, respectively.

The structure for being coupled to the rotation shaft may be formed in a center part of the frame, and the upper surface part of the frame may be formed on the outside.

The slide bearing according to an embodiment of the present invention may further include a lubricating oil tank connected to the inlet part and the outlet port, respectively, wherein the lubricating oil being supplied from the lubricating oil tank through the inlet port of the bearing support passes through the oil grooves of the first and second oil paths, and is circulated to the lubricating oil tank through the outlet port of the bearing support.

The slide bearing according to an embodiment of the present invention may further include a pump provided between the inlet port of the bearing support and the lubricating oil tank to compulsorily circulate the lubricating oil.

The slide bearing according to an embodiment of the present invention may further include a mount part provided inside the frame and capable of being fixed in a body to the coupling part of the rotation shaft using plural fasteners.

With the above-described construction, the first and second oil paths, in which the respective oil grooves cross one another, are provided on the friction surfaces of the frame of the slide bearing, and communicate with each other to enable the lubricating oil to flow. Accordingly, a sufficient lubricant film can be formed around the frame that is in contact with the corresponding part of the bearing support.

Also, the first and second oil paths are provided as described above, and even if overheat occurs in the slide bearing due to a long time operation of the slide bearing, oil drops in the form of a lump can be prevented from being produced in oil groove patterns formed on the friction surfaces of the slide bearing.

Also, since the first and second oil paths are provided as described above, a smooth rotation of the rotation shaft about the bearing support can be secured, and the friction noise between the slide bearing of the rotation shaft and the bearing support and the abrasion of the slide bearing and the bearing support can be reduced.

### BRIEF DESCRIPTION OF THE DRAWINGS

The above and other objects, features and advantages of the present invention will be more apparent from the following detailed description taken in conjunction with the accompanying drawings, in which:
FIG. 1 is a schematic perspective view of a conventional slide bearing;
FIG. 2 is a schematic front view of a conventional slide bearing;
FIG. 3 is a schematic side view of a conventional slide bearing;
FIG. 4 is a schematic perspective view of a slide bearing according to a first embodiment of the present invention;
FIG. 5 is a schematic front view of a slide bearing according to a first embodiment of the present invention;
FIG. 6 is a schematic side view of a slide bearing according to a first embodiment of the present invention;
FIG. 7 is a schematic perspective view of a slide bearing according to a second embodiment of the present invention;
FIG. 8 is a schematic front view of a slide bearing according to a second embodiment of the present invention;
FIG. 9 is a schematic side view of a slide bearing according to a second embodiment of the present invention;
FIG. 10 is a schematic perspective view illustrating a state in which a sliding bearing according to the present invention is accommodated in a bearing support;
FIG. 11 is a schematic sectional view illustrating a bearing support accommodating a slide bearing according to the present invention;
FIG. 12 is a schematic view illustrating a state in which a sliding bearing according to the present invention is fixed to a rotation shaft in an interference fitting method and is accommodated in a counterpart bearing support; and
FIG. 13 is a schematic view illustrating a state in which a sliding bearing according to the present invention is fixed to a rotation shaft through a medium of fasteners and is accommodated in a counterpart bearing support.

### DETAILED DESCRIPTION OF THE PREFERRED EMBODIMENTS

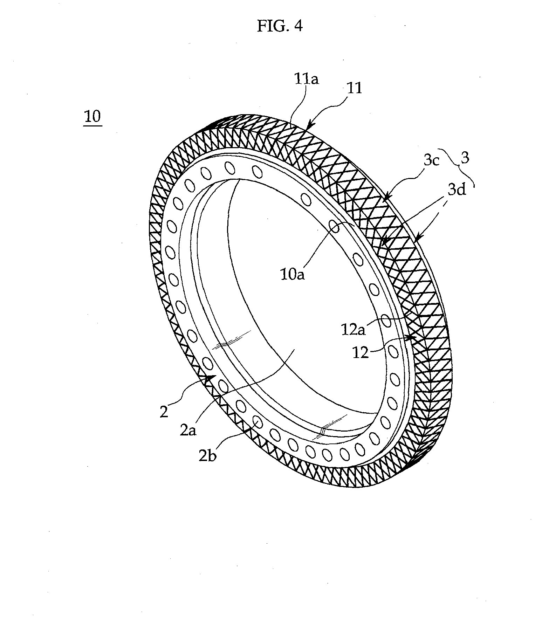

Hereinafter, a sliding bearing according to the preferred embodiments of the present invention will be described with reference to FIGs. 4 to 13. In the following description and drawings, the same reference numerals are used to designate the same or similar components, and so repetition of the description on the same or similar components will be omitted.

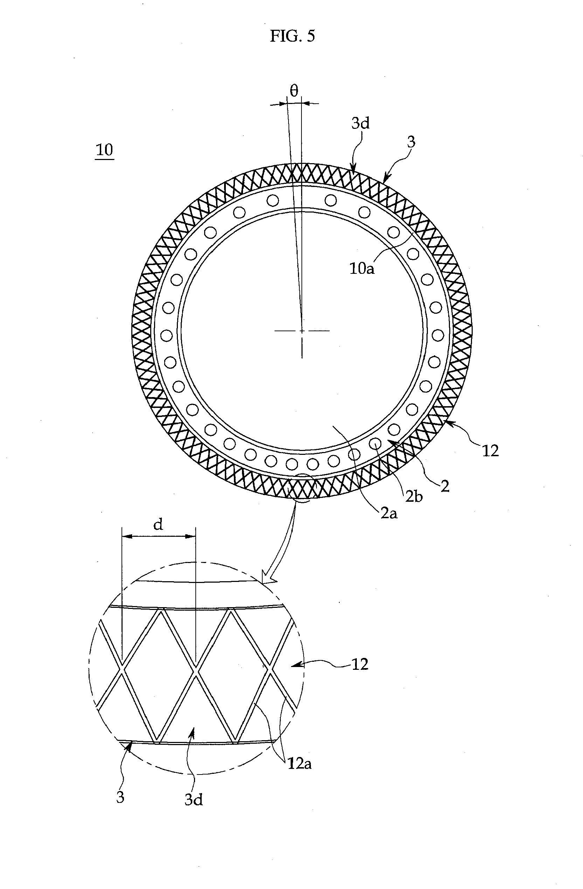

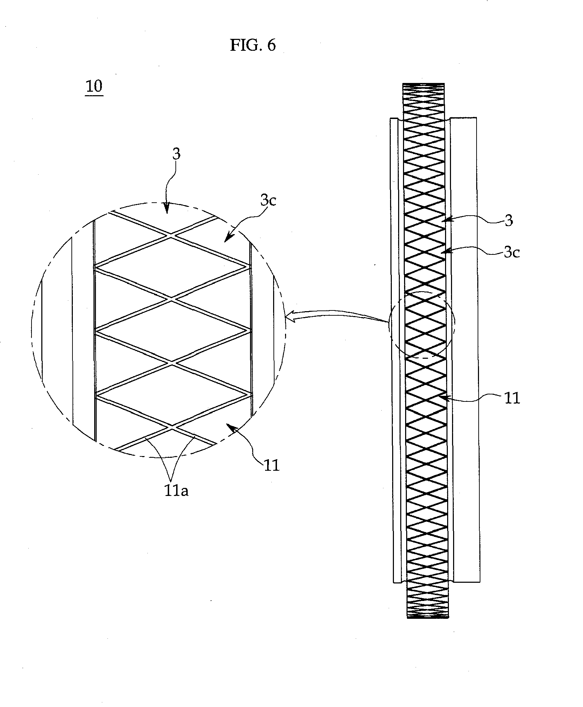

FIG. 4 is a schematic perspective view of a slide bearing according to a first embodiment of the present invention, FIG. 5 is a schematic front view of a slide bearing according to a first embodiment of the present invention, and FIG. 6 is a schematic side view of a slide bearing according to a first embodiment of the present invention.

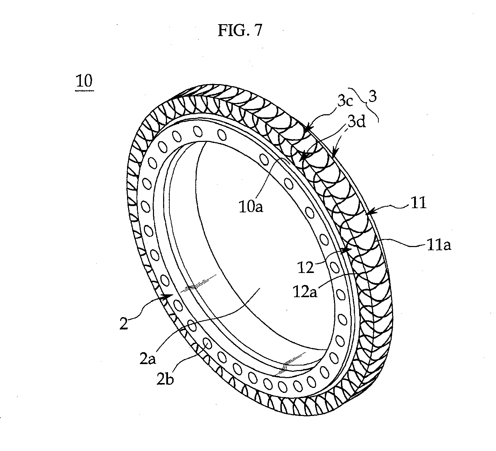

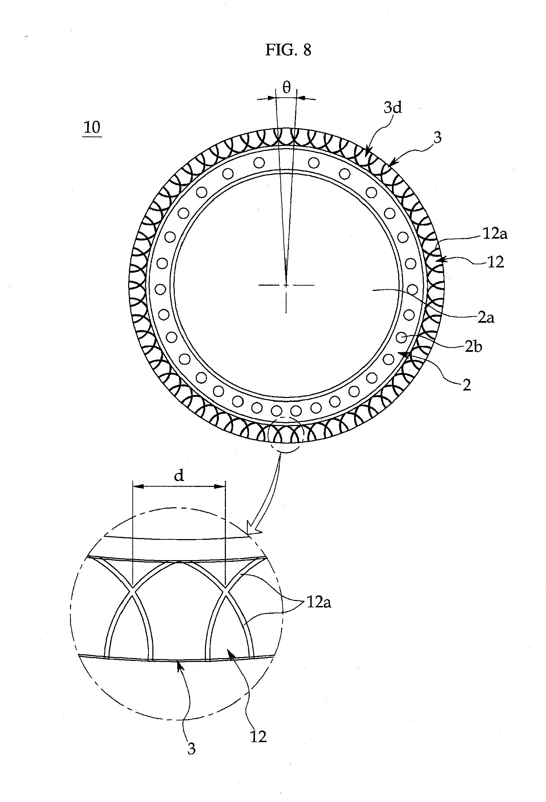

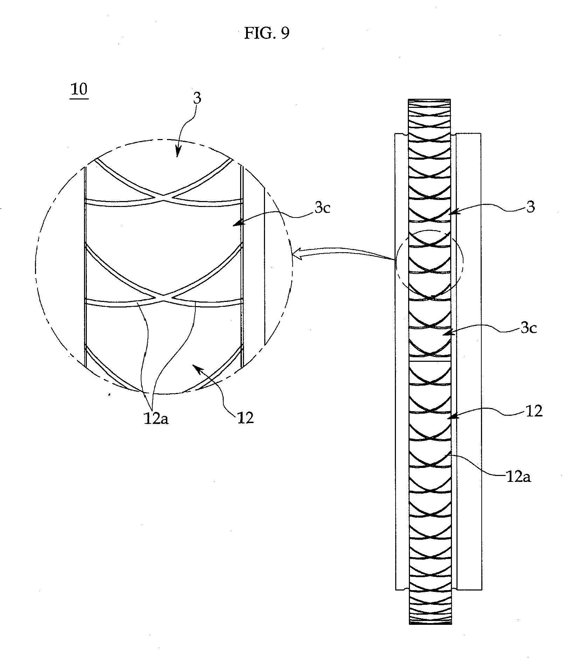

Also, FIG. 7 is a schematic perspective view of a slide bearing according to a second embodiment of the present invention, FIG. 8 is a schematic front view of a slide bearing according to a second embodiment of the present invention, and FIG. 9 is a schematic side view of a slide bearing according to a second embodiment of the present invention.

A sliding bearing 10 according to an embodiment of the present invention, as illustrated in FIGs. 4 to 9, includes a frame 3 having a structure formed in one direction thereof to be coupled to a rotation shaft, oil grooves 11 a and 12a and plural friction surfaces formed in the other direction thereof. Also, the slide bearing 10 according to an embodiment of the present invention has important technical features as follows in addition to the basic construction as described above.

On a friction surface, e.g. an upper surface part 3c, of the frame 3, an oil path or a first oil path 11, in which oil grooves 11a repeatedly provided along the upper surface part 3c thereof are formed to cross one another, is provided. Also, on friction surfaces, e.g. two side surface parts 3d, of the frame 3, oil paths or second oil paths 12, in which oil grooves 12a repeatedly provided along the respective side surface parts thereof are formed to cross one another, are provided. The first and second oil paths 11 and 12 communicate with each other so that lubricating oil can flow from the first oil path 11 to the second oil paths 12 or vice versa, or from an external lubricating oil supply source to the first and second oil paths 11 and 12 simultaneously.

The sliding bearing 10 as constructed above according to an embodiment of the present invention can form a sufficient lubricant film around the frame 3 that is in contact with the corresponding parts of the bearing support (not illustrated), secure a smooth rotation of the rotation shaft about the bearing support, and reduce friction noises between the sliding bearing 10 of the rotation shaft and the bearing support.

Also, the sliding bearing according to the present invention may be further limited to the following detailed embodiments in addition to the basic construction as described above.

In an embodiment of the present invention, at least one of the friction surfaces is formed through crossing of the oil grooves 11a and 12a. In a detailed embodiment of the present invention, at least one of the friction surfaces is formed through crossing of straight line type oil grooves 11a and 12a (See FIGs. 4 to 6). In this case, it is preferable that at least one of the friction surfaces is formed through crossing of the oil grooves 11a and 12a at an acute angle. In addition, an angle θ between a crossing point of the oil grooves 11a and 12a and a crossing point of the oil grooves adjacent to the crossing point is in the range of 3°∼20°, preferably, 3°∼10°, more preferably 4°∼8° outward from the central axis of the slide bearing. In case that the angle θ is less than 3° it is difficult for worker to manufacture the oil grooves leading to increase of rejected articles, while in case that the angle θ is more than 20° this makes lubrication property of the oil grooves inferior.

Further, an interval d between a crossing point of the oil grooves 11a and 12a and a crossing point of the oil grooves adjacent to the crossing point is in the range of 20∼40 mm, preferably, 25∼35 mm.

Also, in the case of straight line type oil grooves 11a and 12a, the gap between the straight lines of the oil grooves can be diversely determined in accordance with the size of the slide bearing 10, the application environment of the slide bearing, and the like.

In another embodiment of the present invention, at least one of the friction surfaces is formed through crossing of the oil grooves 11a and 12a in the form of a curved line. In a detailed embodiment of the present invention, it is preferable that at least one of the friction surfaces is formed through crossing of the oil grooves 11a and 12a in the form of an arc (See FIGs. 7 to 9). In this case, it is preferable that at least one of the friction surfaces is formed through crossing of the oil grooves 11a and 12a in the form of an arc having a curvature. In addition, an angle θ between a crossing point of the oil grooves 11a and 12a and a crossing point of the oil grooves adjacent to the crossing point is in the range of 3°∼20°, preferably, 3°∼10°, more preferably 4°∼8° outward from the central axis of the slide bearing. In case that the angle θ is less than 3° it is difficult for worker to manufacture the oil grooves leading to increase of rejected articles, while in case that the angle θ is more than 20° this makes lubrication property of the oil grooves inferior.

Further, an interval d between a crossing point of the oil grooves 11a and 12a and a crossing point of the oil grooves adjacent to the crossing point is in the range of 20∼40 mm, preferably, 25∼35 mm.

Also, in the case in which the oil grooves 11a and 12a of the first and second oil paths 11 and 12 are in the form of a curve, the curvature radius of the curves of the oil grooves can be diversely determined in accordance with the size of the slide bearing 10, the application environment of the slide bearing, and the like.

In an embodiment of the present invention, it is preferable that the friction surfaces are composed of an upper surface part 3c having a first oil path 11 including the oil grooves 11a, and both side surface parts 3d provided with second oil paths 12 including the oil grooves 12a, respectively. In a detailed embodiment of the present invention, the straight line type oil grooves 11a are repeatedly formed in the first oil path 11, and the oil grooves 12a in the form of a curve are repeatedly formed in the second oil path 12. In another embodiment of the present invention, the oil grooves 11a in the form of a curve are repeatedly formed in the first oil path 11, and the straight line type oil grooves 12a are repeatedly formed in the second oil path 12.

In an embodiment of the present invention, it is preferable that the oil grooves 11a and 12a are "V" or "U"-shaped grooves in consideration of all sorts of conditions, such as an easy inflow of the lubricating oil, a smooth flow of the lubricating oil, convenience in processing, and the like (See FIGs.4 to 9).

In an embodiment of the present invention, lubricating oil reserve grooves 10a may be further formed in both corner parts of the frame 3 to store and distribute a predetermined amount of lubricating oil to its neighborhood (See FIGs. 4, 7, and 11).

The lubricating oil reserve groove 10a enables a sufficient amount of lubricating oil to be supplied to a gap between the slide bearing 10 and the bearing support 13 that accommodates the slide bearing when the slide bearing 10 is rotated.

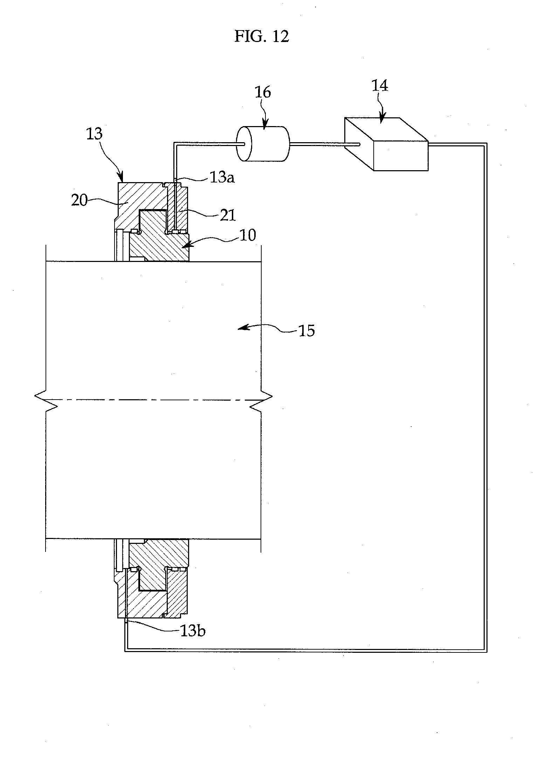

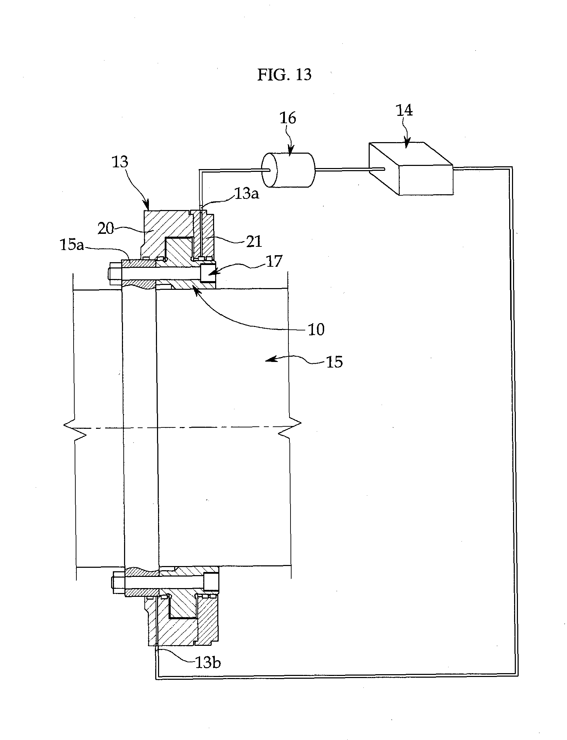

In an embodiment of the present invention, the slide bearing 10 may further include a lubricating oil inlet port 13a and a lubricating oil outlet port 13b provided on one side and the other side of the bearing support 13, respectively. The slide bearing 10 may further include a lubricating oil tank 14 connected to the inlet port 13a and the outlet port 13b, respectively (See FIGs. 12 and 13). The lubricating oil being supplied from the lubricating oil tank 14 through the inlet port 13a of the bearing support 13 passes through the oil grooves 11a and 12a of the first and second oil paths 11 and 12, and is circulated to the lubricating oil tank 14 through the outlet port 13b of the bearing support 13.

In the bearing support - lubricating oil tank arrangement structure as described above, if the rotation shaft 15 having the slide bearing 10 is accommodated in the bearing support 13, the lubricating oil being supplied from the lubricating oil tank 14 is circulated along a path composed of the bearing support 13, the sliding bearing 10, and the lubricating oil tank 14 due to a pressure difference occurring between the inlet port 13a and the outlet port 13b of the bearing support 13 when the rotation shaft 15 is rotated.

In an embodiment of the present invention, a pump 16 for compulsorily circulating the lubricating oil may be further provided between the inlet port 13a of the bearing support 13 and the lubricating oil tank 14 (See FIGs. 12 and 13).

In this case, if the rotating shaft 15 having the slide bearing 10 is accommodated in the bearing support 13, the lubricating oil being supplied from the lubricating oil tank 14 by the operation of the pump 16 is compulsorily circulated along the path composed of the bearing support 13, the sliding bearing 10, and the lubricating oil tank 14. Also, an oil filter (not illustrated) for filtering impurities of the lubricating oil may be further provided in an inner part or an outer part of the lubricating oil tank 14, or between the lubricating oil tank 14 and the pump 16.

In an embodiment of the present invention, the rotation shaft 15 is fixed in a body into the center hole 2a of the sliding bearing 10 in an interference fitting method, and the sliding bearing 10 is accommodated and used in the counterpart bearing support 13 (See FIG. 12).

In an embodiment of the present invention, a mount part 2, which can be fixed in a body to the coupling part 15a of the rotation shaft 15 using plural fasteners 17 such as bolts and nuts, is further provided inside the frame 3 (See FIG. 13). In this case, the coupling part 15a of the rotation shaft 15 is detachably fixed to the mount part 2 of the frame 3 using the fasteners 17.

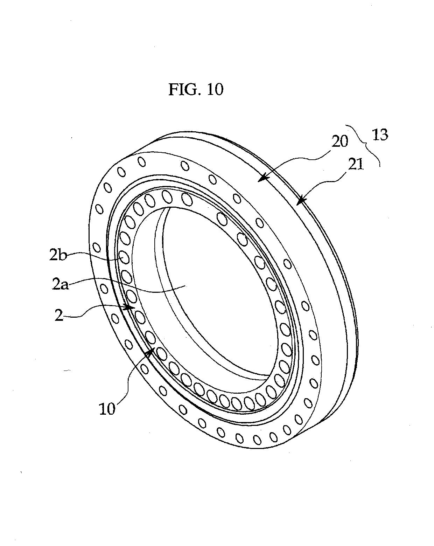

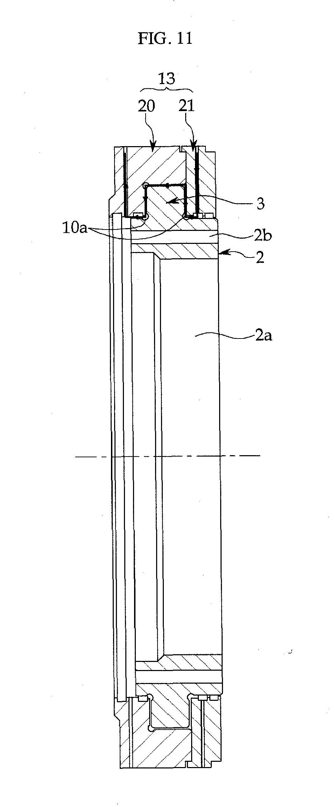

On the other hand, the bearing support 13 may be provided in a manner that it includes a single housing (not illustrated) accommodating the slide bearing 10, and a fixing ring (not illustrated) fixed to the housing to prevent the slide bearing 10 accommodated in the housing from detached from the housing. AS illustrated in FIGs. 10 and 11, the bearing support may also be provided in a manner that it includes a first casing part 20 accommodating a part of the slide bearing 10, a second casing part 21 accommodating the remaining part of the slide bearing 10, and a fastener 17 detachably fixing the first casing part 20 to the second casing part 21.

On the assumption that the slide bearing according to the present invention is applied to a bearing support provided in a machine, the operation of the slide bearing will be described with reference to FIGs. 12 and 13.

In an embodiment of the present invention, as illustrated in FIG. 12, it is assumed that the rotation shaft 15 is fixed into the center hole 2a of the slide bearing 10 in an interference fitting method, and the slide bearing 10 fixed to the rotation shaft 15 is accommodated in the counterpart bearing support 13.

If the rotation shaft 15 is rotated, the lubricating oil being supplied from the lubricating oil tank 14 flow into the first oil path 11 provided on the upper surface part 3c of the frame 3 of the slide bearing 10 and the second oil paths 12 provided on the two side surface parts 3d of the frame 3 through the inlet port 13a of the bearing support 13, due to the pressure difference occurring between the inlet port 13a and the outlet port 13b of the bearing support 13 or by the pump 16 provided in the structure as described above.

Then, the lubricating oil flowing into a part of the first and second oil paths 11 and 12 neighboring the inlet port 13a of the bearing support 13 flows along the oil grooves 11a and 12a of lattice patterns or arc crossing patterns in the first and second oil paths 11 and 12, and is discharged to the lubricating oil tank 14 through the outlet port 13b of the bearing support 13 to be circulated again.

In another embodiment of the present invention, as illustrated in FIG. 13, it is assumed that the coupling part 15a of the rotation shaft 15 is fixed to the mount part 2 of the slide bearing 10 using the fastener 17, and the slide bearing 10 fixed to the rotation shaft 15 is accommodated in the counterpart bearing support 13.

If the rotation shaft 15 is rotated, the lubricating oil being supplied from the lubricating oil tank 14 flow into the first oil path 11 provided on the upper surface part 3c of the frame 3 of the slide bearing 10 and the second oil paths 12 provided on the two side surface parts 3d of the frame 3 through the inlet port 13a of the bearing support 13, due to the pressure difference occurring between the inlet port 13a and the outlet port 13b of the bearing support 13 or by the pump 16 provided in the structure as described above.

Then, the lubricating oil flowing into a part of the first and second oil paths 11 and 12 neighboring the inlet port 13a of the bearing support 13 flows along the oil grooves 11a and 12a of lattice patterns or arc crossing patterns in the first and second oil paths 11 and 12, and is discharged to the lubricating oil tank 14 through the outlet port 13b of the bearing support 13 to be circulated again.

Although a preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. A slide bearing including a frame (3) having a structure formed in one direction thereof to be coupled to a rotation shaft, oil grooves (11 a) and (12a) and plural friction surfaces formed in the other direction thereof, the slide bearing comprising:
oil paths (11) and (12) formed on the friction surfaces, respectively, by the oil grooves (11a) and (12a) for the flow of lubricating oil;
wherein the respective oil paths communicate with each other so as to enable the lubricating oil to flow.

2. The slide bearing of claim 1, wherein at least one of the friction surfaces is formed through crossing of the oil grooves (11a) and (12a).

3. The slide bearing of claim 1 or 2, wherein at least one of the friction surfaces is formed through crossing of the straight line type oil grooves (11 a) and (12a).

4. The slide bearing of claim 3, wherein at least one of the friction surfaces is formed through crossing of the oil grooves (11a) and (12a) at an acute angle.

5. The slide bearing of claim 3, wherein an angle (θ) between a crossing point of the oil grooves (11a) and (12a) and a crossing point of the oil grooves adjacent to the crossing point is in the range of 3°∼20° outward from the central axis of the slide bearing.

6. The slide bearing of claim 3, wherein an angle (θ) between a crossing point of the oil grooves (11a) and (12a) and a crossing point of the oil grooves adjacent to the crossing point is in the range of 4°∼8° outward from the central axis of the slide bearing.

7. The slide bearing of claim 3, wherein an interval d between a crossing point of the oil grooves (11a) and (12a) and a crossing point of the oil grooves adjacent to the crossing point is in the range of 20∼40 mm.

8. The slide bearing of claim 1 or 2, wherein at least one of the friction surfaces is formed through crossing of the oil grooves (11a) and (12a) in the form of a curved line.

9. The slide bearing of claim 8, wherein at least one of the friction surfaces is formed through crossing of the oil grooves (11 a) and (12a) in the form of an arc having a curvature.

10. The slide bearing of claim 8, wherein an angle (θ) between a crossing point of the oil grooves (11a) and (12a) and a crossing point of the oil grooves adjacent to the crossing point is in the range of 3°∼20° outward from the central axis of the slide bearing.

11. The slide bearing of claim 8, wherein an angle (θ) between a crossing point of the oil grooves (11 a) and (12a) and a crossing point of the oil grooves adjacent to the crossing point is in the range of 4°∼8° outward from the central axis of the slide bearing.

12. The slide bearing of claim 8, wherein an interval d between a crossing point of the oil grooves (11a) and (12a) and a crossing point of the oil grooves adjacent to the crossing point is in the range of 20∼40 mm.

13. The slide bearing of claim 1 or 2, wherein the friction surfaces are composed of an upper surface part (3c) having a first oil path (11) including the oil grooves (11a), and both side surface parts (3d) having second oil paths (12) including the oil grooves (12a), respectively.

14. The slide bearing of claim 13, wherein straight line type oil grooves (11a) are repeatedly formed in the first oil path (11), and the oil grooves (12a) in the form of a curve are repeatedly formed in the second oil path (12).

15. The slide bearing of claim 13, wherein the oil grooves (11a) in the form of a curve may be repeatedly formed in the first oil path (11), and the straight line type oil grooves (12a) are repeatedly formed in the second oil path (12).

16. The slide bearing of any one of claims 1, 2, 4- 7, 9-12, 14 and 15, wherein the oil grooves (11a) and (12a) are "V" or "U"-shaped grooves.

17. The slide bearing of claim 1, further comprising lubricating oil reserve grooves (10a) formed in both corner parts of the frame (3) to store and distribute a predetermined amount of lubricating oil to its neighborhood.

18. The slide bearing of claim 1, further comprising a bearing support (13) coupled to the upper surface part (3c) and the two side surface parts (3d) of the frame (3) to be rotated.

19. The slide bearing of claim 18, further comprising a lubricating oil inlet port (13a) and a lubricating oil outlet port (13b) provided on one side and the other side of the bearing support (13), respectively.

20. The slide bearing of claim 1, wherein the structure for being coupled to the rotation shaft is formed in a center part of the frame (3), and the upper surface part (3c) of the frame (3) is formed on the outside.

21. The slide bearing of claim 19, further comprising a lubricating oil tank (14) connected to the inlet part (13a) and the outlet port (13b), respectively, wherein the lubricating oil being supplied from the lubricating oil tank (14) through the inlet port (13a) of the bearing support (13) passes through the oil grooves (11a) and (12a) of the first and second oil paths (11) and (12), and is circulated to the lubricating oil tank (14) through the outlet port (13b) of the bearing support (13).

22. The slide bearing of claim 21, further comprising a pump (16) provided between the inlet port (13a) of the bearing support (13) and the lubricating oil tank (14) to compulsorily circulate the lubricating oil.

23. The slide bearing of claim 20, further comprising a mount part (2) provided inside the frame (3) and capable of being fixed in a body to the coupling part (15a) of the rotation shaft (15) using plural fasteners (17).

24. The slide bearing of claim 2, wherein an angle (θ) between a crossing point of the oil grooves (11a) and (12a) and a crossing point of the oil grooves adjacent to the crossing point is in the range of 3°∼20° outward from the central axis of the slide bearing.

25. The slide bearing of claim 2, wherein an angle (θ) between a crossing point of the oil grooves (11a) and (12a and a crossing point of the oil grooves adjacent to the crossing point is in the range of 4°∼8° outward from the central axis of the slide bearing.

## Amended claims

### Amended claims in accordance with Rule 137(2) EPC.

**1.** A slide bearing including
a frame (3) having a structure formed in inner direction thereof to be coupled to a rotation shaft, and
having an outer radial friction surface (3c) and both lengthwise friction surfaces (3d) including a plurality of oil grooves (11a, 12a), respectively, in the outer direction thereof, the slide bearing comprising:
oil paths (11, 12) formed on the outer radial friction surface (3c) and the lengthwise friction surfaces (3d), respectively, by the oil grooves (11a, 12a) for the flow of lubricating oil;
wherein the oil grooves (11a) in the oil path (11) are repeatedly formed in a predetermined interval, and the oil grooves (12a) in the oil path (12) are repeatedly formed in a predetermined interval; and
wherein the respective oil grooves (11a, 12a) meet at the edges between the outer radial friction surface (3c) and the lengthwise friction surfaces (3d) so as to enable the lubricating oil to flow.

**2.** The slide bearing of claim 1, wherein at least one of the oil paths (11, 12) in the friction surfaces is formed in the form of crossed oil grooves (11a, 12a).

**3.** The slide bearing of claim 1 or 2, wherein at least one of the oil paths (11, 12) in the friction surfaces is formed in the form of crossed oil grooves (11a, 12a), and the respective oil grooves (11a, 12a) are of helical type.

**4.** The slide bearing of claim 3, wherein the respective crossed oil grooves (11a, 12a) is in an acute angle.

**5.** The slide bearing of claim 3, wherein an angle (0) between a crossing point of the oil grooves (11a, 12a) and a crossing point of the oil grooves (12a) adjacent to the crossing point about the imaginary central axis of the slide bearing is in the range of 3°~20° outward from the central axis of the slide bearing.

**6.** The slide bearing of claim 3, wherein an angle (θ) between a crossing point of the oil grooves (11a, 12a) and a crossing point of the oil grooves (12a) adjacent to the crossing point about the imaginary central axis of the slide bearing is in the range of 4°~8° outward from the central axis of the slide bearing.

**7.** The slide bearing of claim 3, wherein an interval d between a crossing point of the oil grooves (11a, 12a) and a crossing point of the oil grooves (12a) adjacent to the crossing point is in the range of 20~40 mm.

**8.** The slide bearing of claim 1 or 2, wherein at least one of the oil paths (11, 12) in the friction surfaces is formed in the form of the respective oil grooves (11a, 12a) crossed, and the respective oil grooves (11a, 12a) is a curved line type.

**9.** The slide bearing of claim 8, wherein the respective oil grooves (11a, 12a) is an arc having a curvature.

**10.** The slide bearing of claim 8, wherein an angle (θ) between a crossing point of the oil grooves (11a, 12a) and a crossing point of the oil grooves (12a) adjacent to the crossing point about the imaginary central axis of the slide bearing is in the range of 3°~20°.

**11.** The slide bearing of claim 8, wherein an angle (θ) between a crossing point of the oil grooves (11a, 12a) and a crossing point of the oil grooves (12a) adjacent to the crossing point about the imaginary central axis of the slide bearing is in the range of 4°~8° outward from the central axis of the slide bearing.

**12.** The slide bearing of claim 8, wherein an interval d between a crossing point of the oil grooves (11a, 12a) and a crossing point of the oil grooves (12a) adjacent to the crossing point is in the range of 20~40 mm.

**13.** The slide bearing of any one of claims 1-2, 4-7 and 9-12, wherein the oil grooves (11a, 12a) are "V" or "U"-shaped grooves.

**14.** The slide bearing of claim 1, further comprising lubricating oil reserve grooves (10a) formed in the both lengthwise friction surfaces (3d) of the frame (3) to store and distribute a predetermined amount of lubricating oil to its neighborhood.

**15.** The slide bearing of claim 1, further comprising a bearing support (13) coupled to the outer radial friction surface (3c) and the both lengthwise friction surfaces (3d) of the frame (3) to be rotated.

**16.** The slide bearing of claim 15, further comprising a lubricating oil inlet port (13a) and a lubricating oil outlet port (13b) provided in two portions of the bearing support (13), respectively.

**17.** The slide bearing of claim 1, wherein the structure for being coupled to the rotation shaft is formed in a center part of the frame (3).

**18.** The slide bearing of claim 16, further comprising a lubricating oil tank (14) connected to the inlet port (13a) and the outlet port (13b), respectively, wherein the lubricating oil being supplied from the lubricating oil tank (14) through the inlet port (13a) of the bearing support (13) passes through the oil grooves (11a, 12a) of the oil paths (11, 12), and is circulated to the lubricating oil tank (14) through the outlet port (13b) of the bearing support (13).

**19.** The slide bearing of claim 18, further comprising a pump (16) provided between the inlet port (13a) of the bearing support (13) and the lubricating oil tank (14) to compulsorily circulate the lubricating oil.

**20.** The slide bearing of claim 17, further comprising a mount part (2) provided inside the frame (3) and capable of being fixed in a body to a coupling part (15a) integrally formed in ef the rotation shaft (15) using plural fasteners (17).

**21.** The slide bearing of claim 2, wherein an angle (θ) between a crossing point of the oil grooves (11a, 12a) and a crossing point of the oil grooves (12a) adjacent to the crossing point about the imaginary central axis of the slide bearing is in the range of 3°~20°.

**22.** The slide bearing of claim 2, wherein an angle (θ) between a crossing point of the oil grooves (11a, 12a) and a crossing point of the oil grooves (12a) adjacent to the crossing point about the imaginary central axis of the slide bearing is in the range of 4°~8°.
